# FASCICULE DE BREVET EUROPEEN

(11) **EP 2 534 020 B1**
(45) Date de publication et mention de la délivrance du brevet: **07.01.2015**
(21) Numéro de dépôt: 11708913.6
(22) Date de dépôt: 09.02.2011
(51) Int. Cl.: E05B 47/00, B60S 5/06, H01M 2/10, B60L 11/18, B60K 1/04

(54) **DISPOSITIF POUR LE REMPLACEMENT D'UNE BATTERIE D'ALIMENTATION D'UN MOTEUR D'ENTRAINEMENT D'UN VEHICULE AUTOMOBILE**
VORRICHTUNG FÜR DAS ERSETZEN EINER VERSORGUNGSBATTERIE EINES ANTRIEBSMOTORS EINES KRAFTFAHRZEUGS
DEVICE FOR REPLACING A BATTERY FOR SUPPLYING A DRIVE MOTOR OF AN AUTOMOBILE

(30) Priorité: 10.02.2010 FR 1050912
(43) Date de publication de la demande: 19.12.2012
(73) Titulaire: Renault S.A.S., 92100 Boulogne-Billancourt (FR)
(72) Inventeur: ESCANDE, Bruno, F-78790 Septeuil (FR); LOMBARTE, Jean-Charles, 78640 Villiers Saint Frederic (FR)
(86) Numéro de dépôt international: PCT/FR2011/050273
(87) Numéro de publication internationale: WO 2011/098725

(56) Documents cités:
- EP-A2- 0 575 864
- WO-A2-2010/004192
- DE-A1- 4 229 687
- DE-A1-102007 032 210
- FR-A1- 2 936 760
- FR-A1- 2 946 305
- US-A1- 2007 113 921

## Description

La présente invention se rapporte à un dispositif d'actionnement pour le verrouillage et/ou déverrouillage d'un conteneur d'énergie de type batterie d'un véhicule automobile électrique. Par la suite, le terme batterie sera utilisé pour une raison de simplification. L'invention porte aussi sur un système de remplacement d'une batterie ou de tout conteneur d'énergie d'un véhicule automobile incluant un tel dispositif d'actionnement ainsi que sur une station de remplacement de batterie utilisant un tel système.

Certains véhicules automobiles, comme les véhicules électriques ou hybrides, comprennent une batterie pour l'alimentation d'un moteur d'entraînement électrique. Il peut se révéler intéressant d'échanger cette batterie lorsque son niveau d'énergie est faible contre une nouvelle batterie chargée. Ceci peut être fait dans une station similaire à une station service dans laquelle on peut remplir un réservoir d'essence d'un véhicule automobile.

Le document US 2007/0113921 décrit un dispositif selon le préambule de la revendication 1.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs.

Une difficulté pour la mise en place d'un tel concept d'échange de batteries réside dans le fait qu'il existe une multitude de véhicules automobiles pouvant comprendre des batteries de type différent, fixées de manière différente sur le véhicule automobile. Or il n'est pas envisageable économiquement de multiplier les dispositifs automatiques de dépose et remplacement de ces différents types de batteries ni de mettre en place une solution manuelle en raison de son coût et du poids des batteries.

Ainsi, pour rendre possible un déploiement aisé des stations d'échange de batteries (nécessitant peu de compétence technologique), il est nécessaire de rendre fiable, robuste, flexible et universel le fonctionnement de ces stations.

Le but de l'invention est donc de fournir une solution de remplacement d'une batterie de véhicule automobile atteignant les objectifs mentionnés ci-dessus.

Le concept de l'invention repose sur un dispositif universel et standard comprenant des outils participant à l'actionnement des mécanismes de verrouillage et/ou déverrouillage d'une batterie montée sur un véhicule automobile, que nous appellerons par sa dénomination anglo-saxonne « toolbox » pour une raison de simplification de la description.

Plus précisément, l'invention repose sur un dispositif toolbox pour l'actionnement du verrouillage et/ou déverrouillage d'une batterie d'alimentation d'un moteur d'entraînement d'un véhicule automobile, caractérisé en ce qu'il comprend une structure support supportant plusieurs modules distincts, comprenant chacun au moins un système de préhension d'un mécanisme de verrouillage/déverrouillage de la batterie et au moins un moyen d'actionnement, le nombre des moyens d'actionnement étant lié au nombre de mouvements à effectuer pour mettre en oeuvre le verrouillage/déverrouillage de la batterie.

Le dispositif toolbox peut comprendre quatre modules comprenant chacun un système de préhension.

Le dispositif toolbox peut comprendre au moins un module comprenant une interface de liaison lui permettant au moins un degré de liberté par rapport à la structure support.

Le dispositif toolbox peut comprendre un module comprenant un premier moyen d'actionnement apte à effectuer un débrayage d'un système de préhension.

Le module peut comprendre un système de came positionné à l'extrémité du premier moyen d'actionnement pour permettre le transfert et la démultiplication des efforts nécessaires.

Le module peut comprendre un second moyen d'actionnement destiné au verrouillage et déverrouillage de l'extrémité d'un système de préhension sur un moyen correspondant d'un verrou de la batterie d'un véhicule automobile.

L'extrémité du système de préhension du module peut comprendre deux lumières aptes à une liaison avec un moyen correspondant en forme de champignon du verrou de la batterie d'un véhicule automobile.

Le dispositif toolbox peut comprendre un module comprenant un troisième moyen d'actionnement permettant l'actionnement du verrouillage/déverrouillage de la batterie d'un véhicule automobile.

Cet actionnement du verrouillage/déverrouillage de la batterie d'un véhicule automobile peut être obtenu par un mouvement de translation et un mouvement de rotation du système de préhension.

Le dispositif toolbox peut comprendre un module comprenant un système de « galet » pour limiter les efforts au niveau de la structure support et éviter sa détérioration.

L'invention porte aussi sur un système de remplacement d'une batterie d'un véhicule automobile, caractérisé en ce qu'il comprend un dispositif toolbox tel que décrit précédemment et un dispositif de levage de ce dispositif toolbox, permettant son déplacement vertical.

L'invention porte aussi sur une station de remplacement d'une batterie d'alimentation d'un moteur d'entraînement d'un véhicule automobile, caractérisée en ce qu'elle comprend un dispositif toolbox tel que décrit précédemment pour le remplacement d'une batterie d'un véhicule automobile.

Ces objets, caractéristiques et avantages de la présente invention seront exposés en détail dans la description suivante d'un mode d'exécution particulier fait à titre non-limitatif en relation avec les figures jointes parmi lesquelles :

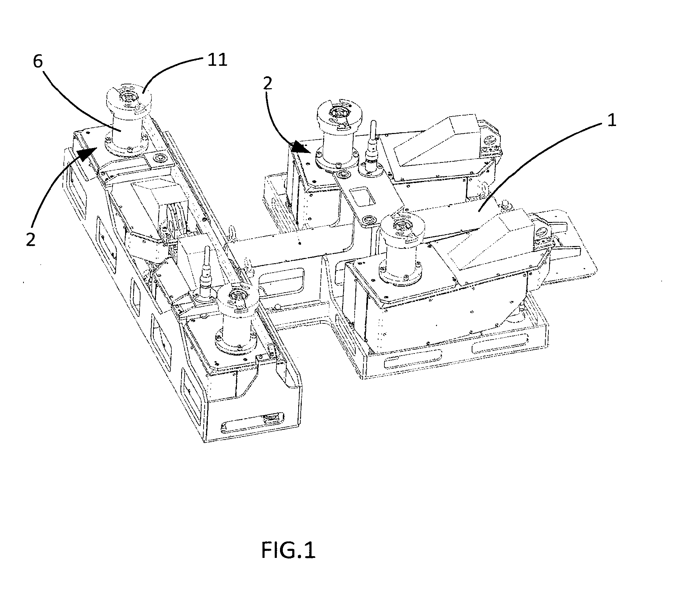

La figure 1 représente une vue en perspective d'un dispositif toolbox selon un mode d'exécution de l'invention.
Les figures 2a et 2b représentent des vues en perspective respectivement de dessus et de dessous d'un module du dispositif toolbox selon le mode d'exécution de l'invention.
La figure 3 représente une vue de côté en coupe d'un module du dispositif toolbox selon le mode d'exécution de l'invention.
La figure 4 représente en perspective la liaison entre un dispositif toolbox selon le mode d'exécution de l'invention et un verrou de batterie d'un véhicule automobile.

Le concept de l'invention repose sur un dispositif d'outils d'actionnement dit «dispositif toolbox », qui comprend un certain nombre de composants standards et modulaires afin d'obtenir un dispositif adapté pour une intervention sur tous types de batteries et tous véhicules automobiles. Ce dispositif toolbox de l'invention représente un adaptateur cinématique universel, permettant de s'adapter à la plus grande diversité de batteries au moindre coût.

Les figures représentent un dispositif toolbox selon un mode d'exécution de l'invention. Ce dispositif d'outils d'actionnement ou dispositif toolbox comprend un châssis ou structure support 1 sur laquelle sont montés quatre modules 2, destinés chacun à actionner un mécanisme de verrouillage/déverrouillage d'une batterie d'un véhicule automobile. Chaque module 2 se présente sous la forme d'un élément distinct de la structure support 1, éventuellement fixé de manière amovible. La structure support 1 présente une forme en T, particulièrement adaptée aux batteries de véhicule automobile positionnées dans le coffre du véhicule. En variante, la structure support 1 pourrait présenter d'autres formes.

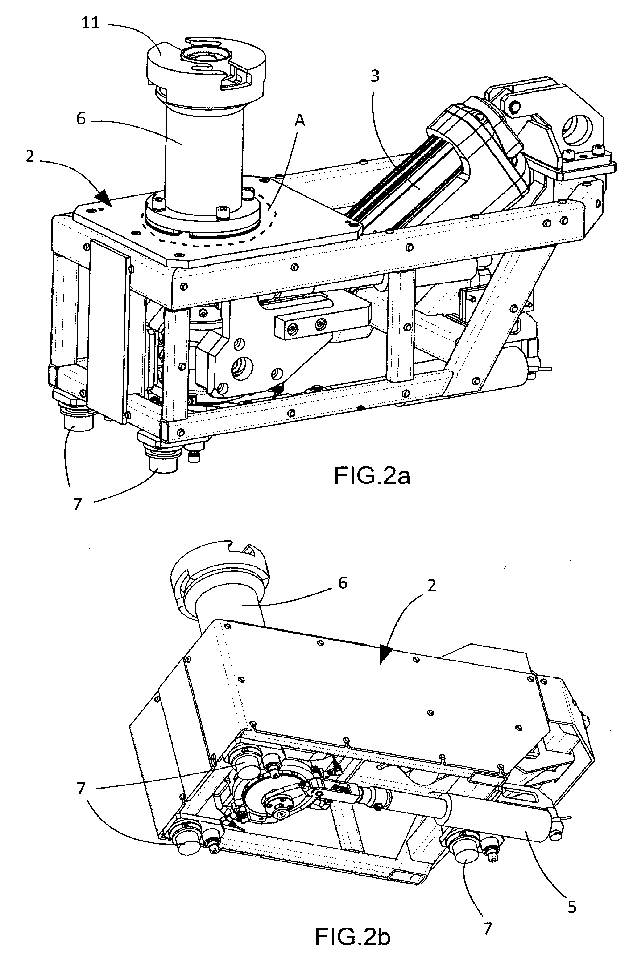

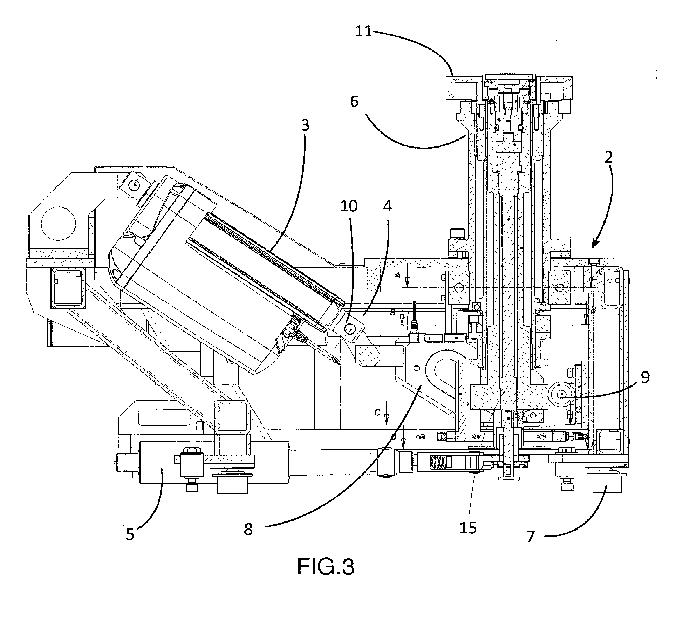

Chaque module 2, plus particulièrement représenté par les figures 2 et 3, comprend un ou plusieurs moyens d'actionnements, incluant un ou plusieurs moteurs simples et standards et un système de préhension 6 des mécanismes de verrouillage, dont la fonction est d'actionner le mécanisme de verrouillage et déverrouillage d'une batterie d'un véhicule automobile. Le nombre de moyens d'actionnement est plus particulièrement lié au nombre de mouvements nécessaires pour la mise en oeuvre du verrouillage et/ou du déverrouillage de la batterie.

Le système de préhension 6 se présente sous une forme cylindrique, s'étendant au-dessus de la surface supérieure du module 2, afin de permettre à son extrémité supérieure 11 de venir en liaison avec les verrous d'une batterie d'un véhicule automobile. Chaque module 2 comprend de plus une connexion électrique pour l'alimentation de ses moteurs, ainsi qu'une interface 7 pour une liaison flexible avec la structure support 1, afin de permettre au dispositif toolbox de positionner correctement sur un véhicule automobile le système de préhension 6. Pour cela, l'interface 7 comprend des éléments limiteur de mouvements, par exemple incluant des billes associées à des plots élastiques, qui permettent de générer des degrés de libertés, comme une rotation, entre les différents modules 2 et la structure support 1, permettant d'ajuster la position des modules 2 par rapport à une batterie à verrouiller/déverrouiller. Cette solution permet ainsi de s'adapter à la dispersion géométrique des différents composants du véhicule automobile et du dispositif toolbox.

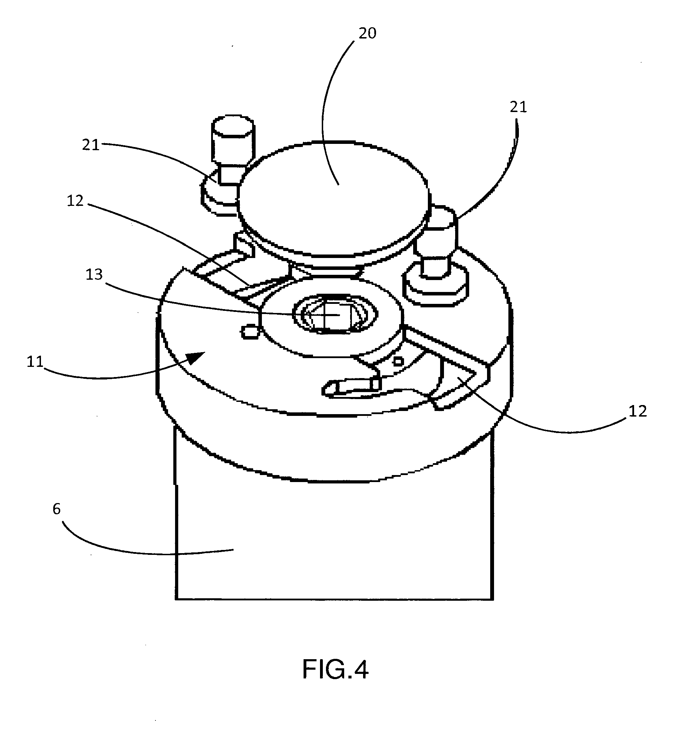

Sur le mode d'exécution représenté, chaque module 2 comprend plusieurs moyens d'actionnement complémentaires, particulièrement visibles sur la figure 3, aptes à permettre la mise en oeuvre de l'ensemble des mouvements nécessaires au verrouillage/déverrouillage. Un premier moyen d'actionnement 3, comprenant par exemple un moteur et un vérin électrique, est destiné à effectuer un débrayage du système de préhension 6 pour la reprise des efforts entre la batterie et la caisse du véhicule automobile. Un second moyen d'actionnement 4, comprenant par exemple un vérin électrique, est destiné au verrouillage de l'extrémité 11 du système de préhension 6 sur un moyen correspondant du verrou de la batterie sur le véhicule automobile. Ce second moyen d'actionnement 4 peut notamment permettre le verrouillage du dispositif toolbox sur des éléments en forme de champignons, qui seront décrits ultérieurement en référence à la figure 4. Enfin, un troisième moyen d'actionnement 5, par exemple de type vérin électrique, permet l'actionnement proprement dit du mouvement de verrouillage/déverrouillage de la batterie, selon par exemple un mouvement de rotation d'un quart ou d'un demi-tour, comme explicité par la suite.

Chaque module 2 comprend de plus un système de came 8 positionné à l'extrémité du premier moyen d'actionnement 3, permettant la démultiplication des efforts nécessaires. Enfin, chaque module 2 comprend un système de « galet » 9, ou tout système équivalent, dont la fonction est la retenue des efforts au niveau de la structure support 1 pour éviter la détérioration du dispositif toolbox lors de la mise en mouvement du premier moyen d'actionnement 3 et de l'actionnement du système à came 8 dans une direction sensiblement horizontale.

Plus précisément, lorsque le vérin du premier moyen d'actionnement 3 reçoit une commande de sortie de la tige 10 de son vérin vers le bas, cette dernière agit sur le système de came 8 qui permet le passage des efforts de compression de rondelles de Belleville, pour finalement déplacer l'axe de compression 15 positionné au sein du système de préhension 6. Lors de cette opération, un galet de réaction 9 absorbe les efforts subis lors du déplacement de cet axe de compression 15.

De manière optionnelle mais avantageuse, le module 2 comprend de plus un moyen de rebouclage interne des efforts afin de soulager les efforts transmis à la structure support 1 et plus globalement à tout le dispositif d'échange de batterie. Ce moyen de rebouclage interne des efforts se trouve plus précisément aménagé dans la zone A représentée sur la figure 2a. La composante verticale de l'effort est transmise à l'axe de compression 15 et la réaction de cette composante est reprise par le système de préhension 6 au niveau de la zone A. La structure support 1 ne supporte aucun effort. De plus, la composante horizontale de l'effort, provenant de la tige 10 du premier moyen d'actionnement 3, est transmise à l'axe de compression 15 et la réaction de cette composante est reprise par le module 2 via le galet de réaction 9. La structure 1 ne supporte pas non plus cet effort.

Bien entendu, l'invention ne se limite pas au mode d'exécution décrit ci-dessus. Notamment, la structure support 1 peut présenter d'autres géométries et recevoir un nombre différent de modules 2. Chaque module 2 peut comprendre un nombre différent de systèmes de préhension 6 et/ou de moyens d'actionnement, de moteurs, mais de préférence entre trois à six. En général, le nombre de moteurs et de moyens d'actionnement est directement lié au nombre de mouvements à effectuer pour mettre en oeuvre le verrouillage et le déverrouillage d'une batterie. De plus, les actionneurs indépendants peuvent être de type électrique, hydraulique, à cinématique à came, etc. Finalement, la structure précise du dispositif toolbox en termes de nombre de modules, de moyens d'actionnement et de systèmes de préhension dépendra en fait du mécanisme de verrouillage de la batterie sur le véhicule automobile. Selon un élément avantageux de l'invention, un même module 2 peut être monté sur des structures support 1 différentes, ce qui permet d'utiliser des modules 2 standard pour tous types de batteries et véhicules automobiles. De même, chaque module 2 comportant exactement le nombre de moyens d'actionnement associés aux mouvements nécessaires au verrouillage/déverrouillage, un tel dispositif toolbox comporte donc des interfaces standards parfaitement adaptées au type de batterie et/ou de véhicule correspondants.

Selon un mode d'exécution avantageux, chaque module 2 peut être remplacé indépendamment du reste de la structure du dispositif toolbox. Cela permet le remplacement du seul module défectueux si nécessaire, sans toucher au reste du dispositif toolbox. Pour cela, l'interface de liaison de chaque module lui permet une liaison amovible.

Le fonctionnement du dispositif toolbox selon l'invention va maintenant être explicité. Un système de levage et éventuellement de déplacement du dispositif toolbox est aménagé au niveau d'une station d'échange de batterie. On peut prévoir un système de levage non pourvu de fonction de déplacement et uniquement limité à une fonction de levage, c'est-à-dire au déplacement sensiblement vertical du dispositif toolbox. La fonction de déplacement sera alors obtenue par un système de déplacement distinct pouvant soit déplacer la batterie à monter soit le véhicule sur laquelle on souhaite monter la batterie. Le dispositif toolbox peut par exemple être déplacé par un dispositif de type rouleaux fonctionnant à l'aide de rails de convoyage. En variante, un robot peut être utilisé pour le déplacement du dispositif toolbox, ce dernier comprenant alors une interface de liaison par exemple en forme de poignées de préhension.

Le système de levage et déplacement du dispositif toolbox permet son positionnement sous un véhicule automobile, d'où on accède à la batterie. Il permet la connexion du dispositif toolbox avec le verrou de la batterie du véhicule automobile, par un déplacement sensiblement vertical du dispositif toolbox. Pour cela et d'abord, au plus trois systèmes de préhension 6 du dispositif toolbox sont correctement positionnés, puisqu'ils sont par définition coplanaires, avant de permettre le positionnement du quatrième système de préhension, voire des autres système de préhension s'il y en a plus de quatre, qui accède(nt) à un positionnement précis grâce à leur mobilité relative à la structure support 1 du fait de leur liaison présentant au moins un degré de liberté, décrite précédemment, qui permet de rattraper les éventuelles dispersions géométriques. Ces deux phases de positionnement du dispositif toolbox peuvent aussi être couplées.

La figure 4 illustre une phase d'approche de la partie haute 11 d'un système de préhension 6 vers un verrou correspondant maintenant une batterie sur un véhicule automobile, mise en oeuvre par un système de levage tel qu'explicité ci-dessus. Seuls la partie inférieure de liaison 20 et les deux éléments de liaison latéraux 21 en forme de champignons de fixation du verrou sont représentés, pour simplifier la figure. L'extrémité 11 du système de préhension 6 comprend deux lumières 12 disposées symétriquement autour d'un élément de liaison 13 qui se présente sous la forme d'une ouverture hexagonale apte à recevoir une tige hexagonale correspondante, non représentée, disposée sous la surface de l'élément de liaison 20 du verrou, ou qui peut être en variante toute autre liaison de type plat/méplat. Chaque lumière 12 présente une partie sensiblement circulaire, de taille importante correspondant à un champignon 21 de sorte de pouvoir insérer un tel champignon par cette partie circulaire. Ensuite, chaque lumière 12 comprend une partie plus étroite, formant une portion d'arc de cercle, au sein de laquelle peut se déplacer la partie plus étroite d'un champignon 21 après son insertion dans l'ouverture circulaire, de sorte d'obtenir son verrouillage et donc la fixation verrouillée du système de préhension 6 sur le verrou de la batterie. Cette fixation verrouillée d'un système de préhension sur un verrou de batterie est mise en oeuvre par sa rotation par le second moyen d'actionnement du module considéré, comme explicité précédemment. En variante, cette fixation pourrait être obtenue par une autre géométrie et/ou d'autres mouvements, comme une translation. Cette opération est réalisée, de préférence en même temps, pour tous les modules du dispositif toolbox, afin d'obtenir la fixation verrouillée de ce dispositif toolbox sur le verrou de la batterie.

Ensuite, la partie centrale 13 de la liaison entre le système de préhension et le verrou se déplace en translation verticale, par l'intermédiaire de l'axe de compression 15 décrit précédemment, pour venir en appui sur un piston et débrayer le verrou, avant de le verrouiller ou le déverrouiller par un mouvement de rotation. Ces deux mouvements sont mis en oeuvre par le troisième moyen d'actionnement explicité précédemment.

Ainsi, l'actionnement des systèmes de préhension 6 du dispositif toolbox permet d'agir sur les verrous de la batterie, pour les verrouiller ou les déverrouiller. Le dispositif toolbox est donc apte au verrouillage et/ou déverrouillage d'une batterie fixée sur un véhicule automobile. En variante, il peut remplir une seconde fonction de maintien et transport de la batterie, qui s'ajoute à sa première fonction d'actionnement des mécanismes de verrouillage et déverrouillage, afin notamment d'évacuer une batterie vide après son déverrouillage, à l'aide d'un système de levage et déplacement. De manière inverse, le dispositif toolbox permet aussi l'approche d'une nouvelle batterie chargée, pour la fixation de cette nouvelle batterie chargée en remplacement de la batterie vide.

Ainsi, la solution décrite présente les avantages suivants :
- elle est adaptée à une standardisation des opérations de verrouillage et déverrouillage d'une batterie sur un véhicule automobile, du fait de sa grande flexibilité par l'utilisation de composants simples et standards adaptés pour une multitude de mouvements différents, pour transférer efficacement les efforts et avec une précision géométrique importante ;
- elle présente un coût réduit ;
- elle est adaptée à une implémentation dans une station-service d'échange de batteries, car elle représente un système à interface standard et encombrement optimisé ;
- elle est adaptée à la constitution d'un réseau de stations-services d'échange de batterie universelles, qui peuvent être adaptées au type de véhicules pris en charge.

## Revendications

1. Dispositif toolbox pour l'actionnement du verrouillage et/ou déverrouillage d'une batterie d'alimentation d'un moteur d'entraînement d'un véhicule automobile, **caractérisé en ce qu'**il comprend une structure support (1) supportant plusieurs modules (2) distincts, comprenant chacun au moins un système de préhension (6) d'un mécanisme de verrouillage/déverrouillage de la batterie et au moins un moyen d'actionnement (3, 4, 5), le nombre des moyens d'actionnement étant lié au nombre de mouvements à effectuer pour mettre en oeuvre le verrouillage/déverrouillage de la batterie.

2. Dispositif toolbox selon la revendication précédente, **caractérisé en ce qu'**il comprend quatre modules (2) comprenant chacun un système de préhension (6).

3. Dispositif toolbox selon l'une des revendications précédentes, **caractérisé en ce qu'**il comprend au moins un module (2) comprenant une interface (7) de liaison lui permettant au moins un degré de liberté par rapport à la structure support (1).

4. Dispositif toolbox selon l'une des revendications précédentes, **caractérisé en ce qu'**il comprend un module (2) comprenant un premier moyen d'actionnement (3) apte à effectuer un débrayage d'un système de préhension (6).

5. Dispositif toolbox selon la revendication précédente, **caractérisé en ce que** le module (2) comprend un système de came (8) positionné à l'extrémité du premier moyen d'actionnement (3) pour permettre le transfert et la démultiplication des efforts nécessaires.

6. Dispositif toolbox selon l'une des revendications précédentes, **caractérisé en ce qu**'il comprend un module (2) comprenant un second moyen d'actionnement (4) destiné au verrouillage et déverrouillage de l'extrémité (11) d'un système de préhension (6) sur un moyen correspondant d'un verrou de la batterie d'un véhicule automobile.

7. Dispositif toolbox selon la revendication précédente, **caractérisé en ce que** l'extrémité (11) du système de préhension (6) du module (2) comprend deux lumières (12) aptes à une liaison avec un moyen (21) correspondant en forme de champignon du verrou de la batterie d'un véhicule automobile.

8. Dispositif toolbox selon l'une des revendications précédentes, **caractérisé en ce qu'**il comprend un module (2) comprenant un troisième moyen d'actionnement (5) permettant l'actionnement du verrouillage/déverrouillage de la batterie d'un véhicule automobile.

9. Dispositif toolbox selon la revendication précédente, **caractérisé en ce que** l'actionnement du verrouillage/déverrouillage de la batterie d'un véhicule automobile est obtenu par un mouvement de translation et un mouvement de rotation du système de préhension (6).

10. Dispositif toolbox selon l'une des revendications précédentes, **caractérisé en ce qu'**il comprend un module (2) comprenant un système de « galet » (9) pour limiter les efforts au niveau de la structure support (1) et éviter sa détérioration.

11. Système de remplacement d'une batterie d'un véhicule automobile, **caractérisé en ce qu'**il comprend un dispositif toolbox selon l'une des revendications précédentes et un dispositif de levage (13) de ce dispositif toolbox, permettant son déplacement vertical.

12. Station de remplacement d'une batterie d'alimentation d'un moteur d'entraînement d'un véhicule automobile, **caractérisée en ce qu'**elle comprend un dispositif toolbox selon l'une des revendications 1 à 10 pour le remplacement d'une batterie d'un véhicule automobile.

## Patentansprüche

1. Toolbox-Vorrichtung zur Betätigung der Verriegelung und/oder Entriegelung einer Batterie zur Versorgung eines Antriebsmotors eines Kraftfahrzeugs, **dadurch gekennzeichnet, dass** sie eine Tragstruktur (1) aufweist, die mehrere verschiedene Module (2) trägt, die jeweils mindestens ein Greifsystem (6) eines Verriegelungs-/Entriegelungsmechanismus der Batterie und mindestens ein Betätigungsmittel (3, 4, 5) aufweisen, wobei die Anzahl der Betätigungsmittel mit der Anzahl der Bewegungen zusammenhängt, die auszuführen sind, um die Verriegelung/Entriegelung der Batterie durchzuführen.

2. Toolbox-Vorrichtung nach dem vorhergehenden Anspruch, **dadurch gekennzeichnet, dass** sie vier Module (2) aufweist, die jeweils ein Greifsystem (6) aufweisen.

3. Toolbox-Vorrichtung nach einem der vorhergehenden Ansprüche, **dadurch gekennzeichnet, dass** sie mindestens ein Modul (2) aufweist, welches eine Verbindungsschnittstelle (7) aufweist, die ihm mindestens einen Freiheitsgrad in Bezug auf die Tragstruktur (1) ermöglicht.

4. Toolbox-Vorrichtung nach einem der vorhergehenden Ansprüche, **dadurch gekennzeichnet, dass** sie ein Modul (2) aufweist, welches ein erstes Betätigungsmittel (3) aufweist, das geeignet ist, eine Auskupplung eines Greifsystems (6) durchzuführen.

5. Toolbox-Vorrichtung nach dem vorhergehenden Anspruch, **dadurch gekennzeichnet, dass** das Modul (2) ein Nockensystem (8) aufweist, das am Ende des ersten Betätigungsmittels (3) positioniert ist, um die Übertragung und die Untersetzung der erforderlichen Kräfte zu ermöglichen.

6. Toolbox-Vorrichtung nach einem der vorhergehenden Ansprüche, **dadurch gekennzeichnet, dass** sie ein Modul (2) aufweist, welches ein zweites Betätigungsmittel (4) aufweist, das zur Verriegelung und Entriegelung des Endes (11) eines Greifsystems (6) an einem entsprechenden Mittel eines Schlosses der Batterie eines Kraftfahrzeugs bestimmt ist.

7. Toolbox-Vorrichtung nach dem vorhergehenden Anspruch, **dadurch gekennzeichnet, dass** das Ende (11) des Greifsystems (6) des Moduls (2) zwei Schlitze (12) aufweist, die für eine Verbindung mit einem entsprechenden pilzförmigen Mittel (21) des Schlosses der Batterie eines Kraftfahrzeugs geeignet sind.

8. Toolbox-Vorrichtung nach einem der vorhergehenden Ansprüche, **dadurch gekennzeichnet, dass** sie ein Modul (2) aufweist, welches ein drittes Betätigungsmittel (5) aufweist, das die Betätigung der Verriegelung/Entriegelung der Batterie eines Kraftfahrzeugs ermöglicht.

9. Toolbox-Vorrichtung nach dem vorhergehenden Anspruch, **dadurch gekennzeichnet, dass** die Betätigung der Verriegelung/Entriegelung der Batterie eines Kraftfahrzeugs durch eine Translationsbewegung und eine Rotationsbewegung des Greifsystems (6) erhalten wird.

10. Toolbox-Vorrichtung nach einem der vorhergehenden Ansprüche, **dadurch gekennzeichnet, dass** sie ein Modul (2) aufweist, welches ein "Rollensystem" (9) aufweist, um die Kräfte an der Tragstruktur (1) zu begrenzen und deren Beschädigung zu vermeiden.

11. System zum Ersetzen einer Batterie eines Kraftfahrzeugs, **dadurch gekennzeichnet, dass** es eine Toolbox-Vorrichtung nach einem der vorhergehenden Ansprüche und eine Vorrichtung zum Heben (13) dieser Toolbox-Vorrichtung, die ihre vertikale Bewegung ermöglicht, aufweist.

12. Station zum Ersetzen einer Batterie zur Versorgung eines Antriebsmotors eines Kraftfahrzeugs, **dadurch gekennzeichnet, dass** sie eine Toolbox-Vorrichtung nach einem der Ansprüche 1 bis 10 zum Ersetzen einer Batterie eines Kraftfahrzeugs aufweist.

## Claims

1. Toolbox device for actuating the locking and/or unlocking of a power supply battery of a drive motor of a motor vehicle, **characterized in that** it comprises a support structure (1) supporting a number of distinct modules (2), each comprising at least one system (6) for gripping a mechanism for locking/unlocking the battery and at least one actuation means (3, 4, 5), the number of actuation means being linked to the number of movements to be performed in order to implement the locking/unlocking of the battery.

2. Toolbox device according to the preceding claim, **characterized in that** it comprises four modules (2) each comprising a gripping system (6).

3. Toolbox device according to either of the preceding claims, **characterized in that** it comprises at least one module (2) comprising a link interface (7) allowing it at least one degree of freedom relative to the support structure (1).

4. Toolbox device according to one of the preceding claims, **characterized in that** it comprises a module (2) comprising a first actuation means (3) suitable for performing a disengaging of a gripping system (6).

5. Toolbox device according to the preceding claim, **characterized in that** the module (2) comprises a cam system (8) positioned at the end of the first actuation means (3) to allow for the transfer and gearing down of the forces needed.

6. Toolbox device according to one of the preceding claims, **characterized in that** it comprises a module (2) comprising a second actuation means (4) intended for the locking and unlocking of the end (11) of a gripping system (6) on a corresponding means of a lock of the battery of a motor vehicle.

7. Toolbox device according to the preceding claim, **characterized in that** the end (11) of the gripping system (6) of the module (2) comprises two openings (12) suitable for a link with a mushroom-shaped corresponding means (21) of the lock of the battery of a motor vehicle.

8. Toolbox device according to one of the preceding claims, **characterized in that** it comprises a module (2) comprising a third actuation means (5) allowing for the actuation of the locking/unlocking of the battery of a motor vehicle.

9. Toolbox device according to the preceding claim, **characterized in that** the actuation of the locking/unlocking of the battery of a motor vehicle is obtained by a translational movement and a rotational movement of the gripping system (6).

10. Toolbox device according to one of the preceding claims, **characterized in that** it comprises a module (2) comprising a "roller" system (9) for limiting the forces on the support structure (1) and avoiding its deterioration.

11. System for replacing a battery of a motor vehicle, **characterized in that** it comprises a toolbox device according to one of the preceding claims and a lifting device (13) for lifting this toolbox device, allowing for its vertical displacement.

12. Station for replacing a power supply battery of a drive motor of a motor vehicle, **characterized in that** it comprises a toolbox device according to one of Claims 1 to 10 for the replacement of a battery of a motor vehicle.
